# FASCICULE DE BREVET EUROPEEN

(11) **EP 1 207 030 B1**
(45) Date de publication et mention de la délivrance du brevet: **25.01.2006**
(21) Numéro de dépôt: 01402962.3
(22) Date de dépôt: 19.11.2001
(51) Int. Cl.: B29C 39/42, B29B 7/84, B29B 13/06

(54) **Procédé de moulage sous vide et installation de moulage correspondante**
Verfahren zum Vakuumformen und entsprechende Formanlage
Vacuum molding process and corresponding molding installation

(30) Priorité: 20.11.2000 FR 0014939
(43) Date de publication de la demande: 22.05.2002
(73) Titulaire: AEF Atelier d'Etudes de Formes, 78800 Houilles (FR)
(72) Inventeur: Lesieux, Gérard, 78800 Houilles (FR)
(74) Mandataire: Lavialle, Bruno François Stéphane

(56) Documents cités:
- DE-A- 2 855 462
- GB-A- 1 154 561
- US-A- 4 439 386
- US-A- 4 473 673
- US-A- 6 143 219

## Description

La présente invention concerne un procédé de moulage utilisable par exemple pour la réalisation de pièces à l'unité ou en petite série.

Les procédés de moulage de ce type sont fréquemment des procédés de moulage sous vide utilisant généralement une enceinte de moulage qui est adaptée pour recevoir un moule présentant une empreinte interne et est pourvue de moyens de sa mise sous vide. Les moules utilisés sont en matériaux poreux comme par exemple en silicone ou en plâtre ou non poreux comme des résines ou des métaux.

Ces procédés consistent à mélanger deux résines dans l'enceinte de moulage et à introduire le mélange dans le moule après avoir mis l'enceinte de moulage sous vide. L'introduction du mélange dans le moule est réalisée soit par gravité soit par injection sous une pression de l'ordre de quelques bars. Le moulage sous vide permet d'obtenir des pièces qui comportent peu de bulles d'air et présentent des caractéristiques mécaniques, géométriques et esthétiques satisfaisantes.

Les deux résines utilisées sont généralement des résines polyester, époxydes ou polyuréthanne qui se polymérisent une fois mélangées l'une à l'autre, la polymérisation débouchant sur le durcissement de la totalité du mélange après un temps de réaction propre aux résines utilisées. Pour réussir un moulage, il est nécessaire que le mélange ne se solidifie qu'après avoir rempli l'empreinte du moule de sorte que la maîtrise du temps de remplissage de l'empreinte, qui dépend de la viscosité du mélange, de la complexité et de la taille de l'empreinte du moule, est essentielle.

Or, il est difficile de contrôler les paramètres du moulage de manière suffisante pour avoir une bonne répétabilité, c'est-à-dire d'obtenir des caractéristiques constantes pour toutes les pièces d'une série produites au moyen des procédés actuels. Il faut alors recourir à de nombreux essais pour affiner les réglages de la machine, ce qui occasionne des rebuts et augmente le temps et le coût de fabrication des pièces.

Il est connu, notamment du document US-A-4 439 386, un procédé de moulage qui, pour limiter la formation de bulles ou de moisissures, prévoit que toutes les opérations, du stockage au moulage proprement dit, soient réalisées sous vide sans rupture de celui-ci entre les opérations.

Il serait donc intéressant de disposer d'un moyen permettant d'améliorer les procédés actuels.

Selon l'invention, on prévoit un procédé de moulage comprenant les étapes de déshumidifier les résines et un moule, de mélanger au moins deux résines, d'introduire le mélange dans le moule,
le procédé de moulage comprenant préalablement au mélange, et à l'introduction de celui-ci dans le moule, les étapes de :
- disposer les résines et le moule dans une enceinte de moulage en balayant celle-ci avec un flux de gaz sec, de préférence de l'azote,
- faire le vide dans l'enceinte de moulage,
- procéder au mélange des résines dans l'enceinte de moulage.

De nombreuses expérimentations ont en effet montré que l'humidité présente dans les résines ou dans les pores du moule modifie les paramètres du moulage et provoque notamment un effet de moussage qui dégrade la qualité des pièces obtenues. Les variations du taux d'humidité affectent par conséquent la répétabilité du procédé. L'invention permet donc de limiter l'influence de ce paramètre. On évite ainsi que de l'humidité pénètre dans l'enceinte de moulage lors de la mise en place des résines et du moule et la combinaison du moulage sous vide et de la déshumidification permet la réalisation de pièces particulièrement précises.

De préférence, l'étape de déshumidification est réalisée jusqu'à obtenir un taux d'humidité inférieur à environ 40 % et avantageusement inférieur à environ 15 %.

Les expérimentations ont montré que le procédé est plus efficace pour ces taux d'humidité, et en particulier pour les taux inférieurs à 15 %.

Avantageusement encore, le procédé comprend l'étape de faire vibrer le moule lors de l'introduction du mélange dans le moule.

Les vibrations imprimées au moule facilitent le remplissage du moule et le décollement des bulles d'air résiduel qui pourraient être restées coincées dans les aspérités du moule. Ceci est particulièrement intéressant dans le cas de résines pâteuses et de moules ayant une empreinte complexe.

Selon une caractéristique particulière, le stockage des moules et des résines est réalisé à une température comprise entre 17 à 25°C environ.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels :
- la figure 1 est une vue schématique en coupe d'une installation de moulage conforme à l'invention,
- la figure 2 est une vue partielle en perspective d'un des bols de résine et du dispositif le supportant dans l'enceinte de moulage,

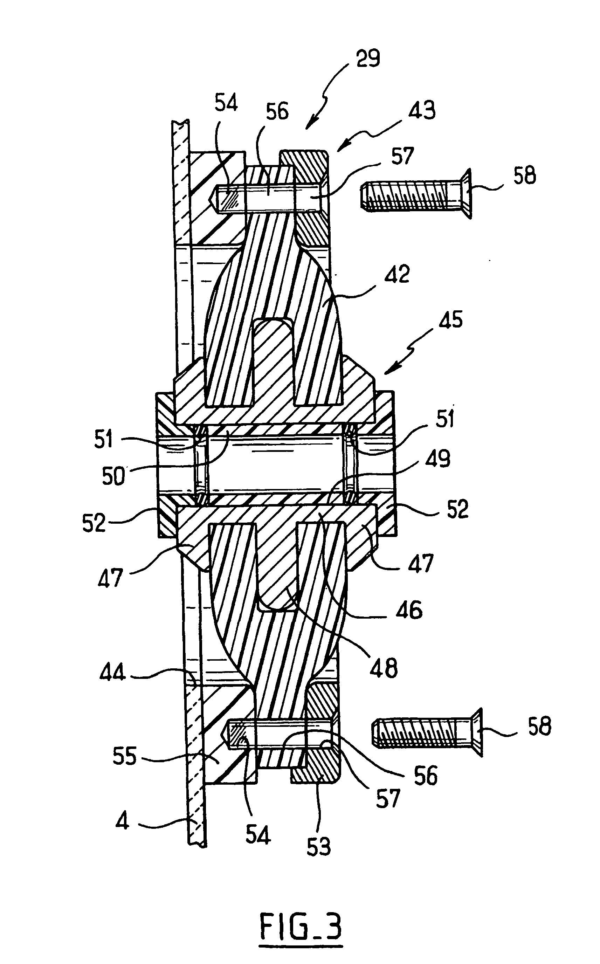

- la figure 3 est une vue en coupe, selon la ligne III-III de la figure 2, d'un palier de guidage,
- la figure 4 est une vue partielle en perspective des moyens de montage dans l'enceinte de moulage du plateau support de moule.

En référence aux figures, l'installation de moulage conforme à l'invention comprend une enceinte de moulage et une enceinte de stockage, respectivement désignées par les références générales 1 et 2, disposées de façon adjacente l'une à l'autre.

L'enceinte de moulage 2 a ici une forme cylindrique mais peut avoir d'autres formes. La forme cylindrique est avantageuse car la différence entre la pression intérieure et la pression extérieure à l'enceinte engendre une contrainte qui s'exerce de façon homogène sur la partie cylindrique de l'enceinte.

L'enceinte de moulage 1 est délimitée par un fond 3, une paroi latérale 4 et une paroi supérieure 5. Les différentes parties de l'enceinte de moulage 1 sont ici associées les unes aux autres par assemblage mais peuvent être réalisées en une seule pièce. La paroi latérale 4 et le fond 3 sont reliés l'un à l'autre par l'intermédiaire de moyens de fixation, ici des collerettes 6, 7 boulonnées, qui sont aptes à coopérer avec des moyens de fixation correspondants d'une rehausse non représentée se présentant sous la forme d'une paroi latérale cylindrique ayant des extrémités pourvues de collerettes analogues à celles de la paroi latérale 4 et du fond 3. La rehausse peut être boulonnées entre le fond 3 et la paroi latérale 4 pour augmenter la hauteur de l'enceinte, ce qui permet de facilement adapter l'enceinte de moulage 1 à recevoir un moule de plus grandes dimensions. D'autres moyens de fixations sont bien entendu envisageables.

La paroi latérale 4 est réalisée en un matériau transparent tel que du polymétacrylate de méthyle et présente une ouverture d'accès associée à un volet d'obturation étanche non représenté.

Les différentes parties de l'enceinte de moulage 1 (y compris le volet d'obturation de l'ouverture d'accès et la rehausse) sont associées les unes aux autres de manière que l'enceinte fermée soit étanche. Cette étanchéité est obtenue par l'intermédiaire de moyens d'étanchéité connus en eux-mêmes tels que des joints en matériau élastomère.

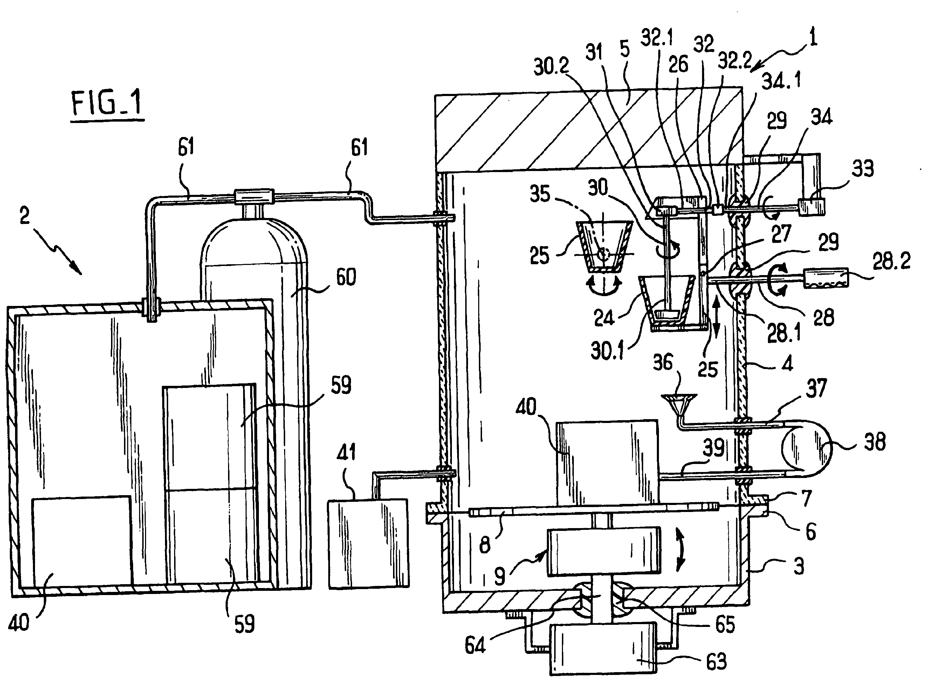

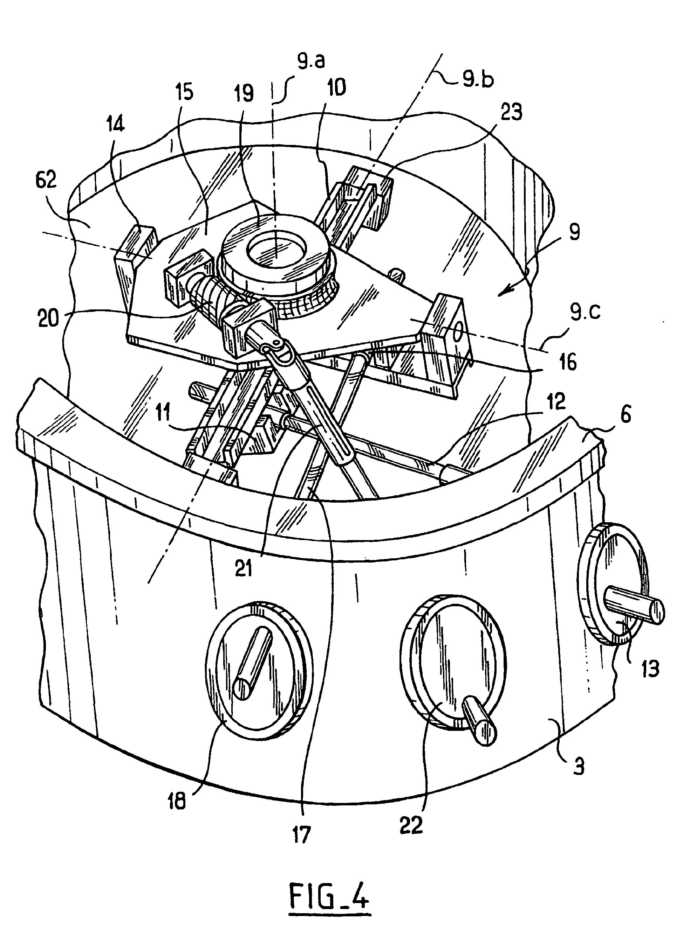

Un plateau 8 est monté sur le fond 3 par l'intermédiaire d'un dispositif de positionnement généralement désigné en 9 (représenté schématiquement à la figure 1 et de façon plus détaillée à la figure 4). Le dispositif de positionnement 9 permet au plateau 8 de pivoter sur 360° autour d'un axe principal de rotation 9.a normal au plateau 8 et selon un débattement angulaire limité autour d'un premier axe secondaire 9.b horizontal et perpendiculaire à l'axe 9.a et d'un second axe secondaire 9.c perpendiculaire aux axes 9.a et 9.b. En variante, on peut prévoir que le plateau ne puisse pivoter selon un débattement angulaire limité qu'autour d'un seul axe.

Le dispositif de positionnement 9 comprend une première armature 10 montée pour pivoter autour de l'axe 9.b sur un berceau 23 solidaire d'une structure support 62 montée sur le fond 3. Une douille 11 est montée sur l'armature 10 de façon excentrée par rapport à l'axe 9.b (ici au-dessous de cet axe) pour pivoter autour d'un axe parallèle à l'axe 9.b. La douille 11 comporte un taraudage d'axe perpendiculaire à l'axe 9.b pour recevoir une extrémité d'une vis de commande 12 dont l'extrémité opposée est associée par l'intermédiaire d'un cardan non représenté à une manivelle 13 montée pour pivoter sur la paroi latérale du fond 3 à l'extérieur de l'enceinte de moulage 1. On comprend que la rotation de la manivelle 13 provoque le vissage ou le dévissage (selon le sens de rotation) de la vis 12 dans la douille 11 engendrant ainsi le pivotement de l'armature 10 autour de l'axe 9.b.

Un berceau 14 est fixé sur l'armature 10 et une deuxième armature 15 est montée sur le berceau 14 pour pivoter autour de l'axe 9.c. Une douille 16 est montée sur l'armature 15 de façon excentrée par rapport à l'axe 9.c (ici au-dessous de cet axe) pour pivoter autour d'un axe parallèle à l'axe 9.c. La douille 16 comporte un taraudage d'axe perpendiculaire à l'axe 9.c pour recevoir une extrémité d'une vis de commande 17 dont l'extrémité opposée est associée par l'intermédiaire d'un cardan non représenté à une manivelle 18 montée pour pivoter sur la paroi latérale du fond 3 à l'extérieur de l'enceinte de moulage 1. On comprend que la rotation de la manivelle 18 provoque le vissage ou le dévissage (selon le sens de rotation) de la vis 17 dans la douille 16 et engendre le pivotement de l'armature 15 autour de l'axe 9.c.

Une roue dentée 19 est montée sur l'armature 15 pour pivoter autour de l'axe 9.a et une vis sans fin 20 est montée sur l'armature 15 pour pivoter autour d'un axe perpendiculaire à l'axe 9.a et engrener avec la roue dentée 19 de manière à entraîner celle-ci en rotation. La vis sans fin 20 est reliée par l'intermédiaire d'un joint d'accouplement 21 à une manivelle 22 montée pour pivoter sur la paroi latérale du fond 3 à l'extérieur de l'enceinte de moulage 1. Afin de ne pas gêner les mouvements de l'armature 15, le joint d'accouplement 21 est agencé pour s'adapter aux déplacements relatifs des éléments auxquels il est relié à savoir la vis sans fin 20 et la manivelle 22. A cet effet, le joint d'accouplement 21 comprend deux cardans, une des fourches d'un des cardans étant reliée à la vis 20 et une des fourches de l'autre cardan étant reliée à la manivelle 22, les deux autres fourches des cardans étant reliées l'une à l'autre par une liaison coulissante. On comprend que la rotation de la manivelle 22 provoque la rotation de la roue dentée 19.

Les manivelles 13, 18, 22 sont montées sur la paroi latérale du fond 3 pour pivoter de façon étanche au moyen de paliers de guidage analogues au palier de guidage 29 décrit ci-après.

Le plateau 8 est fixé sur la roue dentée 19.

Il est possible d'intercaler entre le fond 3 et le plateau 8 un dispositif vibratoire. Le dispositif vibratoire 63 est ici fixé sous le fond 3 à l'extérieur de l'enceinte de moulage 1. La structure support 62 est reliée au dispositif vibratoire par une tige 64 est sensiblement verticale traversant le fond 3 et sur une extrémité de laquelle la structure support est fixée, l'extrémité opposée de la tige étant solidaire de l'organe vibrant du dispositif vibratoire 63. La tige 64 est reçue dans un palier de guidage 65 analogue au palier de guidage 29 décrit ci-après. Ce palier permet à la tige de vibrer tout en maintenant l'étanchéité de l'enceinte de moulage 1. Le dispositif vibratoire peut également être disposé entre la roue dentée 19 et le plateau 8.

Un premier bol 24 et un second bol 25 disposés au-dessus du plateau 8 dans l'enceinte de moulage 1 sont montés sur la paroi latérale 4 pour pivoter autour d'un axe horizontal de manière qu'ils puissent être basculés pour pouvoir vider leur contenu.

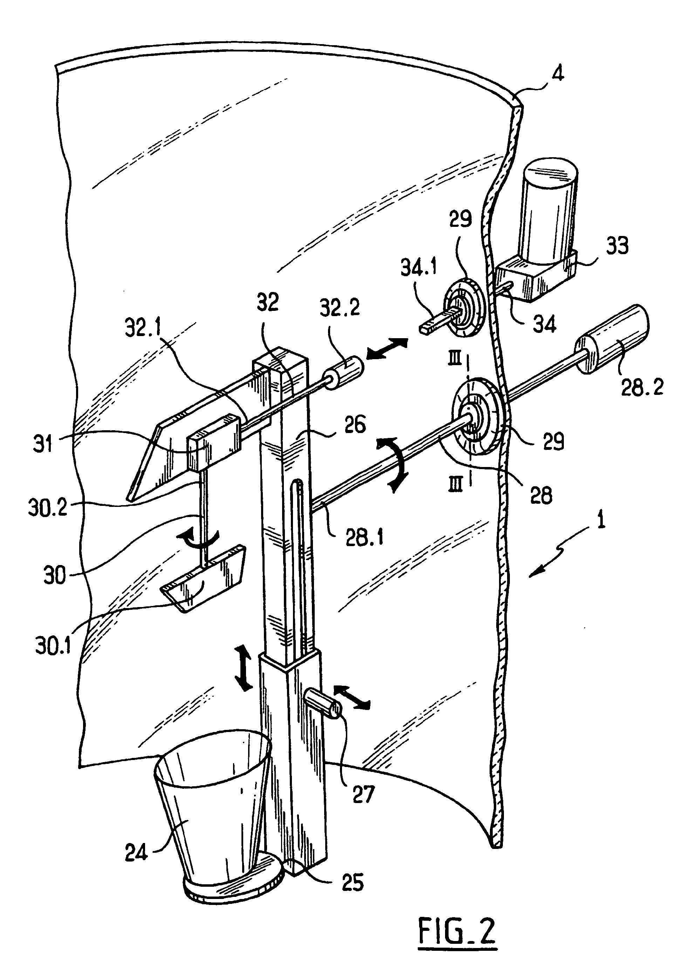

Le premier bol 24 repose sur un élément support 25. L'élément support 25 est monté pour coulisser sur le montant vertical d'une potence 26 entre une position haute (représentée à la figure 1) et une position basse (représentée à la figure 2). L'élément support 25 est maintenu dans sa position haute par l'intermédiaire d'un taquet 27 monté sur l'élément support 25 pour être mobile entre une position verrouillée dans laquelle une de ses extrémités est en saillie pour être reçue dans un logement de la potence et une position déverrouillée dans laquelle cette extrémité est escamotée.

La potence 26 est solidaire d'une extrémité 28.1 d'un bras 28 d'axe horizontal traversant la paroi latérale 4 et dont l'extrémité opposée 28.2 s'étend à l'extérieur de l'enceinte de moulage 1. Le bras 28 est monté sur la paroi latérale 4 pour pivoter et coulisser au travers de celle-ci de manière étanche par l'intermédiaire d'un palier de guidage 29 qui sera décrit ultérieurement. L'extrémité opposée 28.2 est pourvue d'une poignée de préhension.

Le premier bol 24 est associé à un mélangeur 30 monté sur la partie en porte-à-faux de la potence 26 pour tourner autour d'un axe du premier bol 24.

Le mélangeur 30 a une extrémité inférieure 30.1 pourvue d'un élément de brassage (ici des pales) qui plonge dans le bol 24 lorsque l'élément support 25 est en position haute et est dégagée de celui-ci lorsque l'élément support 25 est en position basse, et une extrémité supérieure 30.2 reliée par l'intermédiaire d'un renvoi d'angle 31 fixé sur la partie en porte-à-faux de la potence 26 à une extrémité 32.1 d'un arbre intermédiaire 32 sensiblement horizontal. L'arbre intermédiaire 32 a une extrémité opposée 32.2 destinée à être entraînée en rotation par un moteur 33.

Le moteur 33 est fixé à l'extérieur de l'enceinte de moulage 1 et possède un arbre de sortie 34 parallèle à l'arbre intermédiaire 32 qui traverse la paroi latérale 4 de l'enceinte de moulage 1 par l'intermédiaire d'un palier de guidage en rotation 29 analogue à celui précédemment mentionné et a son extrémité libre 34.1 disposée dans l'enceinte de moulage 1. La distance séparant le bras 28 de l'arbre intermédiaire 32 est sensiblement égale à celle séparant le bras 28 de l'arbre de sortie 34.

L'extrémité 32.2 de l'arbre intermédiaire 32 et l'extrémité libre 34.1 de l'arbre de sortie 34 sont pourvues de moyens de leur accouplement mutuel en rotation qui sont agencés pour permettre un engagement ou un dégagement desdites extrémités par un déplacement relatif de celles-ci. Ici, l'extrémité 32.2 est pourvue d'un logement de section non circulaire correspondant à la section de l'extrémité libre 34.1 de l'arbre de sortie 34 du moteur 33, à savoir ici une section carrée. Ainsi, l'extrémité 32.2 de l'arbre intermédiaire 32 peut recevoir à coulissement selon une direction parallèle à lui-même l'extrémité libre 34.1 de l'arbre de sortie 34 du moteur 33. On remarquera que l'extrémité libre 34.1 de l'arbre de sortie 34 est biseautée pour faciliter son introduction dans le logement de l'extrémité 32.2. Bien entendu, d'autres types de moyens d'accouplement mutuel en rotation de ces extrémités sont envisageables dès lors qu'ils sont agencés pour permettre un engagement ou un dégagement desdites extrémités par un déplacement relatif de celles-ci. En particulier, le logement de l'extrémité 32.2 peut présenter une ouverture latérale de manière que l'extrémité 34.1 puisse être engagée latéralement dans le logement de l'extrémité 32.2 par une rotation du bras 28.

Le deuxième bol 25 s'étend au-dessus du premier bol 24 et est monté à une extrémité d'un bras 35 traversant la paroi latérale 4 au moyen d'un palier de guidage (non visible sur les figures) analogue au palier de guidage 29 et ayant une extrémité opposée (non visible sur les figures) qui s'étend à l'extérieur de l'enceinte de moulage 1 et est pourvue d'une poignée de préhension. Le bras 35 est monté dans le palier au moins pour pivoter autour de son axe et éventuellement pour coulisser le long de celui-ci.

L'enceinte de moulage 1 reçoit également des moyens d'introduction de la résine dans le moule. Ces moyens comprennent ici un entonnoir 36 qui est relié par une conduite 37 traversant la paroi latérale 4 à une pompe péristaltique 38 située à l'extérieur de l'enceinte de moulage 1 et elle-même reliée par une conduite 39 à la partie inférieure du moule 40 reposant sur le plateau 8. Les conduites traversent la paroi latérale 4 par des ouvertures ménagées dans celles-ci et pourvues de moyens d'étanchéité et de préférence par des paliers de guidage 29. D'autres moyens d'introduction de la résine peuvent être simplement constitués par un entonnoir ménagé sur la partie supérieure du moule et relié à la base de l'empreinte par un canal ménagé dans le moule.

De manière classique, l'enceinte de moulage 1 est associée à des moyens d'aspiration, tels qu'une pompe à vide 41, permettant de faire le vide dans l'enceinte de moulage 1 et de maintenir à l'intérieur de celle-ci une pression de l'ordre de 0,5.10 Pa.

Le palier de guidage 29 comprend un corps déformable 42 ayant un pourtour externe pourvu de moyens de sa fixation étanche 43 au bord 44 d'une ouverture ménagée dans la paroi latérale 4 et un noyau 45 tubulaire rigide de guidage qui traverse le corps déformable 42 et est agencé pour recevoir l'élément concerné (à savoir ici les bras 28 et 35, l'arbre de sortie 34, les conduites 37 et 39) de façon étanche à pivotement autour et à coulissement le long de l'axe du noyau.

Le corps déformable 42 est réalisé en un matériau élastiquement déformable tel qu'un élastomère par exemple à base de polyuréthanne et présente de préférence une dureté de l'ordre de 30 à 80 shore A.

Le noyau 45 comprend une pièce tubulaire 46 en un matériau rigide, ici de l'aluminium, qui présente extérieurement des épaulements d'extrémité 47 destinés à s'étendre de part et d'autre du corps déformable 42 et une collerette d'ancrage 48 disposée entre les épaulements d'extrémité et destinée à être enchâssée dans le corps déformable 42. La pièce tubulaire 46 délimite un chambrage interne 49 qui reçoit un tube 50 ayant un diamètre interne légèrement supérieur au diamètre externe de l'élément concerné pour former un logement pour celui-ci et deux joints toriques 51 qui sont disposés de chaque côté du tube 50 et ont un diamètre interne légèrement inférieur au diamètre externe de l'élément concerné. L'ensemble formé par les joints toriques 51 et le tube 50 est maintenu en position par l'intermédiaire d'embouts tubulaires 52 qui sont fixés à chaque extrémité du chambrage interne 49 et ont un diamètre interne égal au diamètre interne du tube 50. Le tube et les embouts tubulaires d'extrémité 52 sont réalisés en un matériau à faible coefficient de friction comme par exemple du polyamide.

Les moyens de fixation 43 comprennent ici une collerette 53 qui vient coiffer le pourtour du corps déformable 42 et se centre sur celui-ci. Des taraudages non débouchants 54 sont réalisés sur le bord 44 de l'ouverture (ou si l'épaisseur de celui-ci n'est pas suffisante, sur une couronne 55 rapportée par soudage ou collage sur ce bord) et des perçages débouchants 56, 57 sont réalisés en correspondance des précédents sur le pourtour du corps déformable 42 et sur la collerette 53. Des vis 58 sont engagées par les perçages 56, 57 dans les taraudages 54 de manière à comprimer le pourtour du corps déformable 42 entre la collerette 53 et la couronne 55.

L'enceinte de stockage 2 doit avoir des dimensions suffisantes pour accueillir un ou plusieurs moules et les pots de résine (référencés respectivement 40 et 59 à la figure 1).

L'enceinte de stockage 2 comprend un absorbeur d'humidité non représenté pour maintenir dans l'enceinte un taux d'humidité faible avantageusement inférieur à 40 % et de préférence inférieur à 15 % environ, notamment en asséchant l'atmosphère dans l'enceinte. L'absorbeur d'humidité utilise ici un dessiccant recyclable (ou réactivable) par exemple au moyen d'un passage en étuve.

L'enceinte de stockage 2 est associée également à des moyens de contrôle de la température apte à maintenir dans l'enceinte de stockage une température comprise entre 17 et 25°C environ.

L'installation comprend également un système de balayage des enceintes 1 et 2 par un gaz neutre tel que de l'azote. Ce système comprend une réserve 60 de gaz neutre sous pression et un circuit de distribution de ce gaz dans les enceintes 1 et 2, ici symbolisé par des conduites 61 débouchant dans les enceintes 1 et 2 par des ouvertures ménagées dans les parois de ces enceintes et pourvues de moyens d'étanchéité.

Le procédé conforme à l'invention débute par une étape de déshumidification du moule 40 et des résines 59. Pour ce faire, les moules 40 sont stockés dans l'enceinte de stockage 2 pendant quelques heures préalablement aux opérations de moulage. Les résines doivent également être stockées dans l'enceinte de stockage 2, en particulier lorsque les pots de résine ont déjà été ouverts. Si l'enceinte de stockage 2 n'a pas un volume suffisant pour contenir tous les pots de résine ouverts, il est possible de soumettre les pots ouverts à un balayage d'azote pendant plusieurs heures de telle manière que l'azote prenne la place de l'air dans les pots puis de refermer lesdits pots. Si les résines présentent un taux d'humidité très élevé, l'étape de déshumidification peut être réalisée en soumettant les résines à un pompage sous vide associé à un balayage d'azote.

Les moules et les résines sont ainsi déshumidifiées en particulier par la mise en contact avec le gaz qui est présent dans l'enceinte de stockage 2 et qui est mis au contact de l'absorbeur d'humidité, à savoir l'air en l'absence du balayage d'azote et, l'azote dans le cas contraire.

Lorsque les résines et le moule ont un taux d'humidité suffisamment faible, à savoir inférieur à 40 % et de préférence inférieur à 15 % environ, les opérations de moulage commencent.

Le moulage peut être réalisé soit par gravité soit sous pression. La durée de remplissage du moule dépend notamment de la viscosité des résines, de la surface et de l'épaisseur de l'empreinte du moule. Cette durée comparée au temps de polymérisation du mélange permet de déterminer si le moulage peut être réalisé par gravité ou doit être réalisé par injection sous une pression de l'ordre de 3 à 5 bars.

Le moule 40 fermé est d'abord disposé dans l'enceinte, puis les deux résines sont placées dans les bols 24, 25, le premier bol 24 étant alors en position basse. Le premier bol 24 est ensuite remonté en position haute. Ces opérations sont effectuées alors que l'enceinte de moulage 1 est balayée intérieurement par un flux d'azote sec de manière à limiter le risque que de l'humidité pénètre dans l'enceinte de moulage 1.

Le volet d'obturation de l'enceinte de moulage 1 est ensuite refermé.

L'enceinte de moulage est alors mise sous vide, c'est-à-dire en dépression par rapport à la pression extérieure.

L'extrémité libre 34.1 de l'arbre de sortie 34 étant reçue dans le logement de l'extrémité 32.2 de l'arbre intermédiaire 32, le moteur 34 est mis en fonctionnement entraînant ainsi le mélangeur 30.

Le deuxième bol 25 est ensuite versé dans le premier bol 24 pour effectuer le mélange des deux résines. Le deuxième bol 25 peut alors être reculé par coulissement du bras 35 dans le palier de guidage qui lui est associé de manière que ce bol 25 ne gêne pas les mouvements ultérieurs du premier bol 24.

Le mélange continue d'être brassé afin de favoriser son dégazage.

Après arrêt du mélangeur 30, l'opérateur fait coulisser le bras 28 de manière à dégager l'extrémité libre 34.1 de l'arbre de sortie 34 du logement de l'extrémité libre 32.2 de l'arbre intermédiaire 32, puis fait pivoter le bras 28 pour verser le contenu du premier bol 24 dans l'entonnoir 36.

On remarquera que l'opérateur peut aisément positionner le premier bol 24 au-dessus de l'entonnoir en faisant coulisser plus ou moins le bras 28 dans le palier de guidage 29. En outre, la déformabilité du corps 42 permet au palier de guidage 29 de se comporter à la manière d'une rotule et autorise un débattement angulaire du bras dans l'ouverture de la paroi latérale 4. On peut par ailleurs prévoir d'autres ouvertures pourvues de paliers 29 dans la paroi latérale 4, par exemple pour permettre le passage d'une tige dont l'extrémité disposée à l'intérieur de l'enceinte de moulage 1 est pourvue d'une pince de préhension et l'extrémité opposée disposée à l'extérieur de l'enceinte de moulage 1 est pourvue d'un élément de commande de la pince.

La pompe 38 injecte le mélange dans le moule 40.

De préférence, le moule est soumis à des vibrations pendant le remplissage. Ces vibrations permettent de décoller les bulles d'air résiduel retenues dans les aspérités du moule et de parfaire le dégazage du mélange. Les vibrations facilitent aussi le remplissage du moule.

L'opérateur peut également incliner le plateau 8 et donc le moule 40 pour faciliter le remplissage complet de celui-ci en actionnant les manivelles 18 et i3. On regroupera de préférence les manivelles 13, 18 et 22 dans une même zone de l'enceinte de moulage 1 de manière que les manivelles soient aisément accessibles par l'opérateur sans déplacement de celui-ci.

A la fin du moulage, l'enceinte de moulage 1 est mise à la pression atmosphérique et le moule 40 est sorti de l'enceinte de moulage 1.

Bien entendu, l'invention n'est pas limitée au mode de réalisation décrit et on peut y apporter des variantes de réalisation sans sortir du cadre de l'invention tel que défini par les revendications.

En particulier, le positionnement du moule et le versement des pots peuvent être réalisés de manière automatique.

En outre, l'invention s'applique à tout procédé de moulage en atmosphère confinée ou non.

Par ailleurs, d'autres modes d'assèchement du gaz utilisé pour la déshumidification peuvent être employés, comme par exemple le chauffage de ce gaz.

## Revendications

1. Procédé de moulage comprenant les étapes de déshumidifier des résines (58) et un moule (40), de mélanger au moins deux résines, et d'introduire le mélange dans le moule (40),
**caractérisé en ce qu'**il comprend, préalablement au mélange et à l'introduction de celui-ci dans le moule, les étapes de :
- disposer les résines (58) et le moule (40) dans une enceinte de moulage (1) en balayant celle-ci avec un flux de gaz sec,
- faire le vide dans l'enceinte de moulage,
- procéder au mélange des résines dans l'enceinte de moulage.

2. Procédé de moulage selon la revendication 1, **caractérisé en ce que** l'étape de déshumidification est réalisée jusqu'à obtenir un taux d'humidité inférieur à environ 40 %.

3. Procédé selon la revendication 2, **caractérisé en ce que** l'étape de déshumidification est réalisée jusqu'à obtenir un taux d'humidité inférieur à environ 15 %.

4. Procédé de moulage selon la revendication 1, **caractérisé en ce que** le gaz sec utilisé est l'azote.

5. Procédé de moulage selon l'une quelconque des revendications 1 à 4, **caractérisé en ce qu'**il comprend l'étape de faire vibrer le moule (40) lors de l'introduction du mélange dans le moule.

6. Procédé de moulage selon l'une quelconque des revendications précédentes, **caractérisé en ce que** le stockage des moules et des résines est réalisé à une température comprise entre 17 à 25°C environ.

## Patentansprüche

1. Formverfahren, umfassend die Schritte des Entfeuchtens von Harzen (58) und einer Form (40), des Mischens mindestens zweier Harze und des Einbringens der Mischung in die Form (40),
**dadurch gekennzeichnet, dass** es vor dem Mischen und dem Einbringen der Mischung in die Form die Schritte umfasst:
- Anordnen der Harze (58) und der Form (40) in einer Formkammer (1), während man diese mit einem Trockengasstrom ausspült,
- Evakuieren der Formkammer,
- Durchführen des Mischens der Harze in der Formkammer.

2. Formverfahren nach Anspruch 1, **dadurch gekennzeichnet, dass** der Schritt des Entfeuchtens durchgeführt wird, bis man einen Feuchtigkeitsgehalt von unter ca. 40% erhält.

3. Verfahren nach Anspruch 2, **dadurch gekennzeichnet, dass** der Schritt der Entfeuchtens durchgeführt wird, bis man einen Feuchtigkeitsgehalt von unter ca. 15% erhält.

4. Formverfahren nach Anspruch 1, **dadurch gekennzeichnet, dass** das verwendete Trockengas Stickstoff ist.

5. Formverfahren nach einem der Ansprüche 1 bis 4, **dadurch gekennzeichnet, dass** es den Schritt des "In-Schwingung-Versetzens" der Form (40) während des Einbringens der Mischung in die Form umfasst.

6. Formverfahren nach einem der vorhergehenden Ansprüche, **dadurch gekennzeichnet, dass** die Lagerung der Formen und der Harze bei einer Temperatur zwischen ca. 17 und 25°C erfolgt.

## Claims

1. A molding method comprising the steps of dehumidifying resins (58) and a mold (40), mixing at least two resins together, and introducing the mixture into the mold (40),
the method being **characterized in that** it comprises, prior to the mixing and introducing the mixture into the mold, the steps of:
placing the resins (58) and the mold (40) in a molding enclosure (1) while sweeping it with a stream of dry gas;
· evacuating the molding enclosure; and
. proceeding to mix the resins in the molding enclosure.

2. A molding method according to claim 1, **characterized in that** the dehumidification step is performed so as to obtain a relative humidity of less than about 40%.

3. A method acorn to claim 2, **characterized in that** the dehumidification step is performed to obtain a relative humidity of less than about 15%.

4. A molding method according to claim 1, **characterized in that** the dry gas used is nitrogen.

5. A molding method according to any one of claims 1 to 4, **characterized in that** it includes the step of causing the mold (40) to vibrate while the mixture is being introduced into the mold.

6. A molding method according to any preceding claim, **characterized in that** the molds and the resins are stored at a temperature lying in the range 17°C to 25°C approximately.
